## Europäisches Patentamt

## European Patent Office

## Office européen des brevets

(19)

(11) Veröffentlichungsnummer: **0 032 369**
A1

(12) # EUROPÄISCHE PATENTANMELDUNG

(21) Anmeldenummer: 81100009.0

(22) Anmeldetag: 02.01.81

(51) Int. Cl.³: **G 06 K 19/08**
G 07 C 11/00

(30) Priorität: 10.01.80 CH 155/80

(43) Veröffentlichungstag der Anmeldung:
22.07.81 Patentblatt 81/29

(84) Benannte Vertragsstaaten:
DE FR GB NL SE

(71) Anmelder: **Zeag Systems AG**
**Rietbachstrasse 5**
**CH-8952 Schlieren-Zürich(CH)**

(72) Erfinder: **Ehrat, Kurt**
**Grebweg 17**
**CH-8162 Steinmaur(CH)**

(74) Vertreter: **Fillinger, Peter, Dr.**
**Rütistrasse 1a**
**CH-5400 Baden(CH)**

(54) Informationsträger für maschinell lesbare Informationen.

(57) Der flache Informationsträger enthält maschinell lesbare Informationen in codierter Form und dient als in Prüfstationen prüfbarer Informationsträger wie z.B. als Identitätskare und/oder Geldersatzkarte und/oder Zeiterfassungskarte. Damit der Informationsträger genügend fälschungssicher und mit üblichen Kopiermitteln nicht kopierbar ist, ist vorgesehen, dass mindestens ein Teil der Information in der geometrischen Anordnung in der Trägereebene sowie der Ausrichtung von quer durch die nicht transparenten Informationsträger verlaufenden Lichtleitern (11) besteht. Die Lichtleiter (11) weisen dabei eine Querschnittsfläche (FL) auf, die nicht grösser als das Quadrat der Dicke (D) des Informationsträger ist.

Fig. 1b

EP 0 032 369 A1

Croydon Printing Company Ltd.

0032369

## Informationsträger für maschinell lesbare Informationen

Die Erfindung betrifft einen flachen Informationsträger welcher maschinell lesbare Informationen in codierter Form enthält und als in Prüfstationen prüfbarer Informationsträger wie.z.B. als Identitätskarte und/oder Geldersatzkarte und/oder Zeiterfassungskarte dient.

Maschinell lesbare Identitätskarten werden verwendet zur maschinellen Personenidentifikation, als Zutrittskarte für den Zutritt in geschützte Räume, als Personalausweis, als Kreditkarte und dgl. Die Karten enthalten eine in codierter Form aufgebrachte, maschinell lesbare Karteninformation.

Der Indentifikationsvorgang geschieht durch Einstecken der Identitätskarte in eine Prüfstation.

Bei maschinell lesbaren Geldersatzkarten sind in geeigneter Codierung und Speicherungsart Geldbeträge gespeichert. Dabei hat eine Karte zu Beginn vor deren Verwendung den Wert eines Maximal-Geldbetrages, welcher in einzelne Teibeträge von normalerweise je gleicher Grösse aufgeteilt ist. Der Maximal-Geldbetrag kann z.B. Fr. 100.-- sein, welcher in hundert Teilbeträge von Fr. 1.-- aufgeteilt ist. Jedem Teilbetrag ist dabei eine spezielle Speicherstelle, die Teilbetrags-Speicherstelle, auf der Karte zugeordnet, welche einzeln löschbar ist. Die Löschung bzw. Entwertung eines Teilbetrages geschieht in einer Prüfstation und kommt für den Kartenbesitzer einer Einzahlung dieses Geldbetrages gleich. Wenn sämtliche Teilbeträge einer Karte gelöscht bzw. entwertet sind, ist die Karte wertlos und kann weggeworfen werden.

Wenn in einer Organisation an jeden Teilnehmer die genau gleiche Geldersatzkarte ausgegeben wird, so kann diese natürlich nicht zur Teilnehmer-Identifikation, d.h. nicht als Identitätskarte verwendet werden. Wenn dagegen jeder Teilnehmer eine individuelle, von allen übrigen abweichende Karte erhält, so kann diese Karte gleichzeitig als Identitätskarte und als Geldersatzkarte verwendet werden.

Auf eine Zeiterfassungskarte können Zeit und Datum in einem Zeiterfassungsgerät automatisch in codierter und maschinell lesbarer Form aufgebracht und gespeichert werden.

An alle drei Arten der maschinell lesbaren Karten, welche allgemein mit Datenkarten benannt seien, werden die folgenden Anforderungen gestellt:

Erstens wird eine genügend hohe Fälschungssicherheit, d.h. Sicherheit gegen Kopieren durch Unberechtigte, verlangt. Bei der Geldersatzkarte heisst dies zusätzlich, dass ein gelöschter Teilbetrag höchstens mit einem Arbeitsaufwand, welcher mindestens grösser als der Teilbetrag ist, unbefugterweise neu auf die Karte aufzubringen ist.

Zweitens wird verlangt, dass die Karten selbst in Massenproduktion extrem billig herzustellen sind und dass die Prüfstationen billig genug sind, dass sie deren Einsatz z.B. beim Zahlungsverkehr verglichen mit den Kosten eines Schalterbeamten wirtschaftlich rechtfertigen.

Drittens ist es wünschbar, dass die Karten-Herstellungs-Einrichtungen und -Verfahren, insbesondere zur Herstellung von Geldersatzkarten, genügend komplex sind, um Fälschungen unrentabel zu machen.

Von den vielen Arten bekannt gewordener maschinell lesbarer Identitätskarten und/oder Geldersatzkarten seien hier nur einige der
wichtigsten erwähnt, wie:

- Karte mit Magnetspur, sogenannte Magnetstreifenkarte
- Karte mit gestanzten Löchern
- Karte aus transparentem Kunststoff mit Schwärzungsstellen

- Karte mit induktiv lesbaren, nicht sichtbaren Metalleinschlüssen

- Karte mit gedruckten Leiterbahnen, zum Teil auch als hochfrequente
  Resonatoren wirkend

- Karte mit hochintegrierten Schaltkreisen, z.B. Deutsche Offenlegungsschrift 2 224 937

- Karte mit optischen Reflektoren bzw. Reflexionszonen, z.B. Deutsche
  Offenlegungsschrift 26 59 639

- Karte mit holographischer Codierung, z.B. nach US-Patent 3.643.216

Bei den Karten der ersten fünf Arten ist die Karteninformation ein-
bzw. zweidimensional auf der Karte vorhanden und deshalb mit handelsüblichen Kopiermitteln leicht kopierbar. Bei diesen Kartenarten kann
die genügende Fälschungssicherheit nur mit zusätzlichen Mitteln bzw.
Verfahren erzielt werden.

Ein solches Verfahren ist beispielsweise die Integration eines Magnetstreifens auf eine Karte mit fälschungssicheren Karteninformationen
und ist unten beschrieben.

Die Karte mit den hochintegrierten Schaltkreisen weist eine hohe Fälschungssicherheit auf, jedoch auch einen hohen Kartenpreis.

Bei den beiden letztgenannten Karten mit Reflexionszonen bzw. holographischer Codierung ist die Karteninformation in dreidimensionaler Form in der Karte enthalten und mit den üblichen zweidimensionalen Kopiermitteln nicht kopierbar. Diese Karten weisen eine hohe Fälschungssicherheit auf. Der Nachteil ist aber dass die Karten für verschiedene Anwendungen zu teuer sind.

Durch die Erfindung soll nun eine genügend fälschungssichere, mit üblichen Kopiermitteln nicht kopierbare, Karte geschaffen werden, die mit den nötigen Fabrikationseinrichtungen verhältnismässig einfach herstellbar ist.

Erfindungsgemäss wird diese Aufgabe dadurch gelöst, dass mindestens ein Teil der Information in der geometrischen Anordnung von quer durch die nicht transparenten Informationsträger verlaufenden Lichtleitern besteht, welche eine Querschnittsfläche aufweisen, die nicht grösser als das Quadrat der Dicke des Informationsträgers ist.

Die Erfindung wird nun anhand der Figuren erläutert. Es zeigen:

Fig. 1 ein Ausführungsbeispiel einer erfindungsgemässen Datenkarte in vergrösserter Darstellung sowie einzelne, vereinfacht gezeichnete Elemente einer Prüfstation der Datenkarte, und zwar

Fig. 1a in einer Aufsicht auf die Kartenebene mit den Karten-Koordinaten X und Y, und

Fig. 1b in einem Schnitt nach der Schnittlinie A - A

Fig. 2 einen Schnitt wie Fig. 1b, ausschnittsweise und noch mehr vergrössert gezeichnet,

Fig. 3 den Lichtintensitätsverlauf längs der Karten X-Richtung des durch die Karte tretenden Lichtes.

Fig 4    einen Schnitt ähnlich Fig 2, jedoch mit modifizierter Karte.

Fig 5    den Lichtintensitätsverlauf hierzu;

Fig 6    einen ausschnittsweise gezeichneten Querschnitt durch die Karte, ähnlich wie Fig 2, jedoch für eine weitere Ausführungsform und ein weiteres Element der Prüfstation.

Fig 7    die gleiche Ausführungsform wie Fig 6 in einer späteren Phase der Kartenprüfung in der Prüfstation.

Fig 8    den vergrösserten Kartenquerschnitt von zwei weiteren Ausführungsformen der Datenkarte, ausschnittsweise gezeichnet.
und
Fig 9

Fig lo    zeigt den Ausschnitt eines Kartenquerschnittes einer weiteren Ausführungsform.

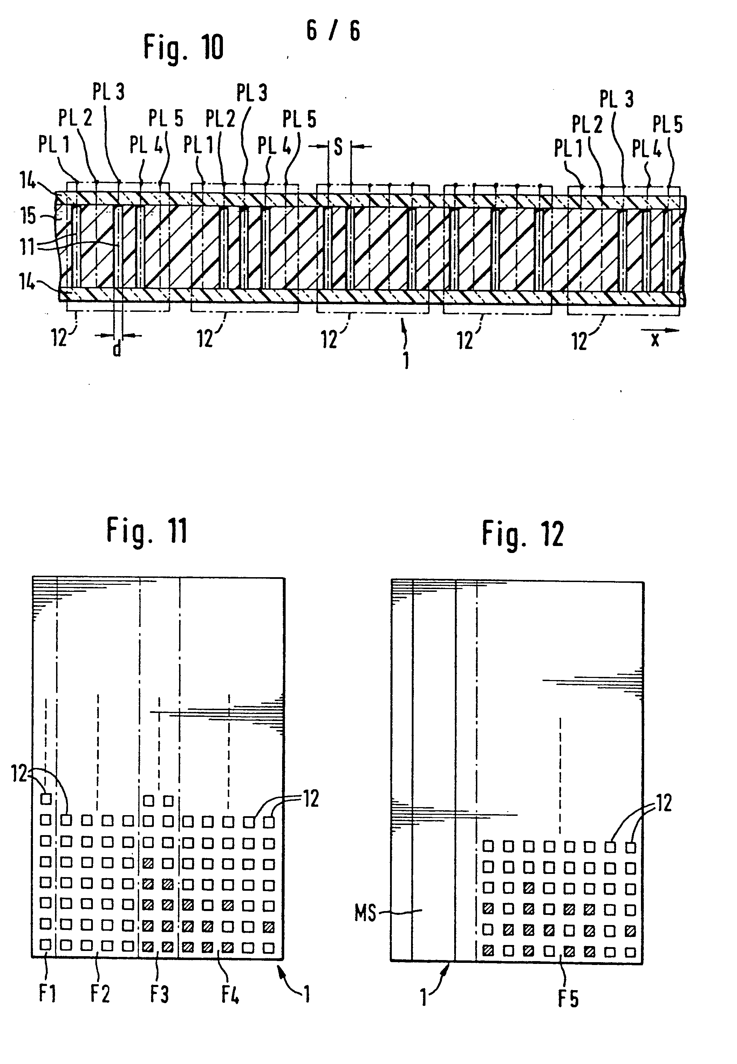

Fig 11    zeigen zwei weitere Ausführungsformen der Karten.
und
Fig 12

Die Datenkarte 1 besteht im wesentlichen aus Kunststoff und kann die üblichen Dimensionen von etwa 55 mal 85 mm Kartenfläche und 0,7 mm Kartendicke aufweisen.

Ueber die Ebene der Datenkarte 1 verteilt sind quer durch die Karte verlaufende Lichtleiter (11) angeordnet. Diese Lichtleiter können auf der Kartenebene senkrecht stehen oder eine andere Winkel-Richtung als 90° zur Kartenebene aufweisen. Die Karteninformation besteht in der geometrischen Anordnung der Lichtleiter in der Kartenebene und/oder deren Richtung. Die Lichtleiter sind vorzugsweise Löcher mit im Vergleich zur Kartendicke D kleinem Durchmesser d bzw. kleinem Querschnitt $F_L$ . Um die Löcher vor Verschmutzung zu schützen, sind sie in einer mittleren, den grössten Teil der Kartendicke beanspruchenden, vorzugsweise nicht transparenten Kunststoffschicht 15 angebracht, welche zu beiden Seiten mit zwei dünnen, transparenten Kunststoff-Deckschichten 14 versehen ist.

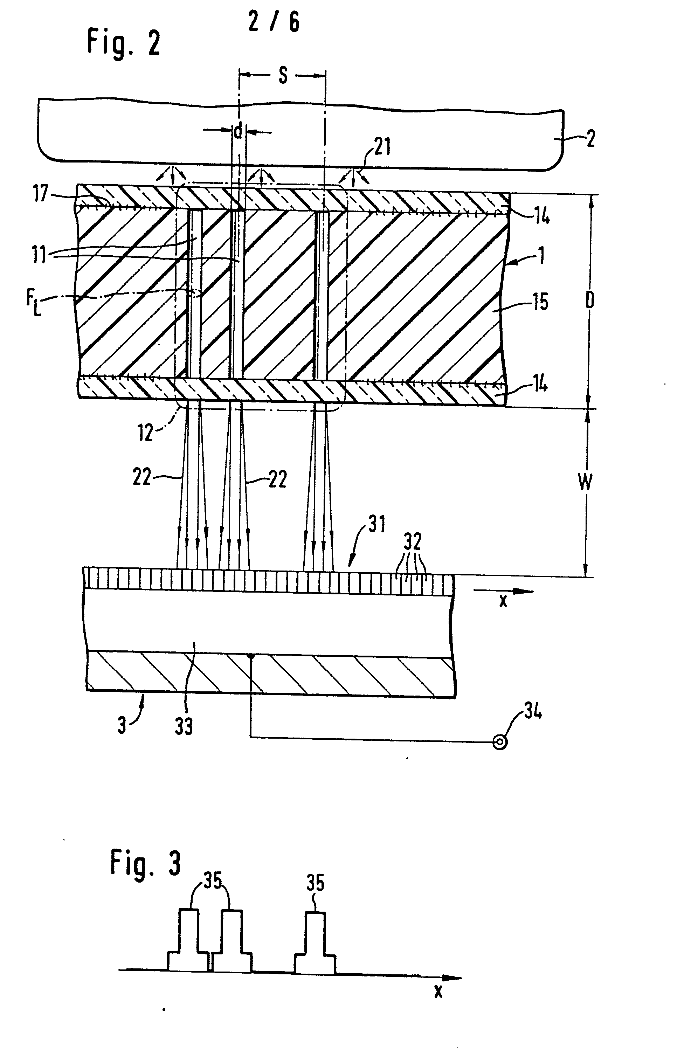

Diese drei Kunststoffschichten können an den Verbindungsstellen 17 (Fig 2) ausserhalb des Bereichs der Löcher miteinander verschweisst sein.

Auf der einen Kartenseite einfallendes Licht 21 wird durch die Lichtleiter 11 durch die Karte 1 geführt, und das aus der Karte bzw. aus den Lichtleitern austretende Licht 22 bildet auf der anderen Kartenseite ein von der Lage und Richtung der Lichtleiter abhängiges und der Karteninformation entsprechendes Lichtmuster 35 (Fig 3).

In der Prüfstation befindet sich eine vorzugsweise diffus strahlende Lichtquelle 2, welche das auf der einen Kartenseite in die Karte einfallende Licht 21 liefert. Ebenfalls in der Prüfstation, auf der andern Kartenseite, befinden sich photoelektrische Sensoren 3, mittels welcher das durch das aus der Karte austretende Licht 22 gebildete Lichtmuster 35 abgetastet werden kann.

Vorzugsweise bestehen diese photoelektrischen Sensoren aus einem einzigen, in der Prüfstation befindlichen, linearen Photodioden-Array 31 mit den einzelnen Photodioden 32, der elektrischen Schaltung 33 und dem elektrischen Photodioden-Ausgang 34.

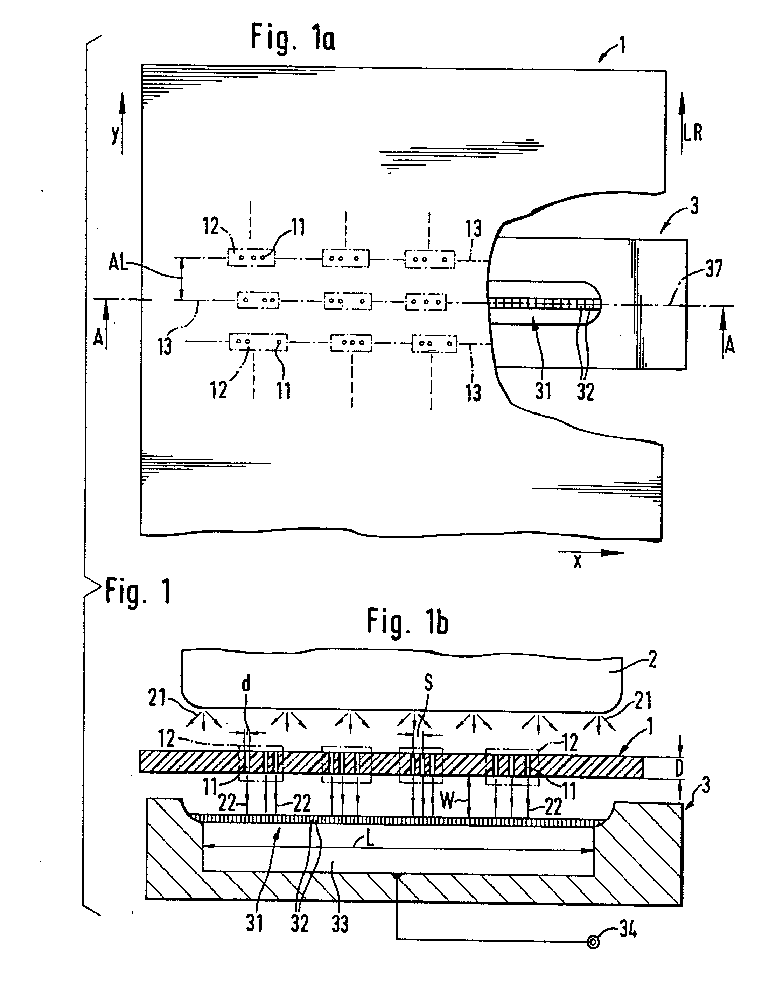

Die Lichtleiter 11 sind gruppenweise längs von mit Lichtleiterlinien 13 bezeichneten Geraden angeordnet (Fig 1). Die einzelnen Lichtleiterlinien sind zueinander parallel und auch parallel zur Photodiodenachse 37 des Photodioden-Arrays 31 liegend, und Lichtlinien 13 und Photodiodenachse 37 stehen senkrecht auf der Laufrichtung LR (Fig 1) der Karte im Prüfgerät.

Dadurch gelangen während dem Kartendurchlauf durch das Prüfgerät simultan die Lichtmuster 35 aller auf jeweils einer Lichtleiterlinie 13 liegenden Lichtleiter auf die in der Photodiodenachse 37 liegenden Photodioden 32.

Während dem Kartendurchlauf wird so Lichtleiterlinie um Lichtleiterlinie photoelektrisch abgetastet.

Es gibt z.B. Photodioden-Arrays mit in einer Linie aneinander
liegenden 1024 Photodioden von 0,025 mm gegenseitiger Distanz
und somit einer Totalbreite der Photodiodenlinie von 0,025.1024
≅ 25 mm. Andere Typen von Photodioden-Arrays weisen 128 oder
256 oder 512 Photodioden auf. Ferner gibt es Ausführungsformen,
bei denen die gegenseitige Distanz 0,015 mm beträgt.

Beim Vorbeilauf der Lichtleiter 11 einer Lichtleiterlinie 13 an
den auf der Photodiodenachse 37 angeordneten Photodioden 32 wird
das vom aus der Karte austretenden Licht 22 verursachten Lichtmuster durch die Photodioden detektiert und mit dem in der elektrischen Schaltung 33 enthaltenen Schieberegister als serielle
elektrische Impulsfolge beim Ausgang 34 abgegeben. Die Impulsfolge, welche die geometrische Anordnung der Lichtleiter und somit
die Karteninformation wiedergibt, wird in der Prüfstation zur
Identifikation ausgewertet. Eine solche Impulsfolge, welche durch
das aus der Karte austretende Licht 22 einer Gruppe von 3 Lichtleitern von Fig 2 entstanden ist, ist in Fig 3 aufgezeichnet.

Die Impulsfolge entspricht natürlich dem durch das austretende
Licht 22 gebildeten Lichtmuster 35.

Wäre die Distanz S der einzelnen Löcher 11 voneinander gross
relativ zur Kartendicke D, so könnten mit herkömmlichen Mitteln
von der Karte zweidimensionale Kopien gefertigt werden, welche
nicht als Fälschung erkannt würden. Um dies zu vermeiden, werden
die Lichtleiter zu Lichtleitergruppen 12 mit mindestens zwei,

vorzugsweise aber über drei Lichtleitern zusammengefasst, wobei der Abstand S von zwei benachbarten Lichtleitern innerhalb der Lichtleitergruppe zumindest weniger als Kartendicke D, vorzugsweise aber weniger als ein Drittel der Kartendicke beträgt. Der Abstand von einer Lichtleitergruppe zur nächsten ist im Prinzip beliebig.

Die in einer Lichtleitergruppe enthaltene Information bildet eine Informationseinheit.

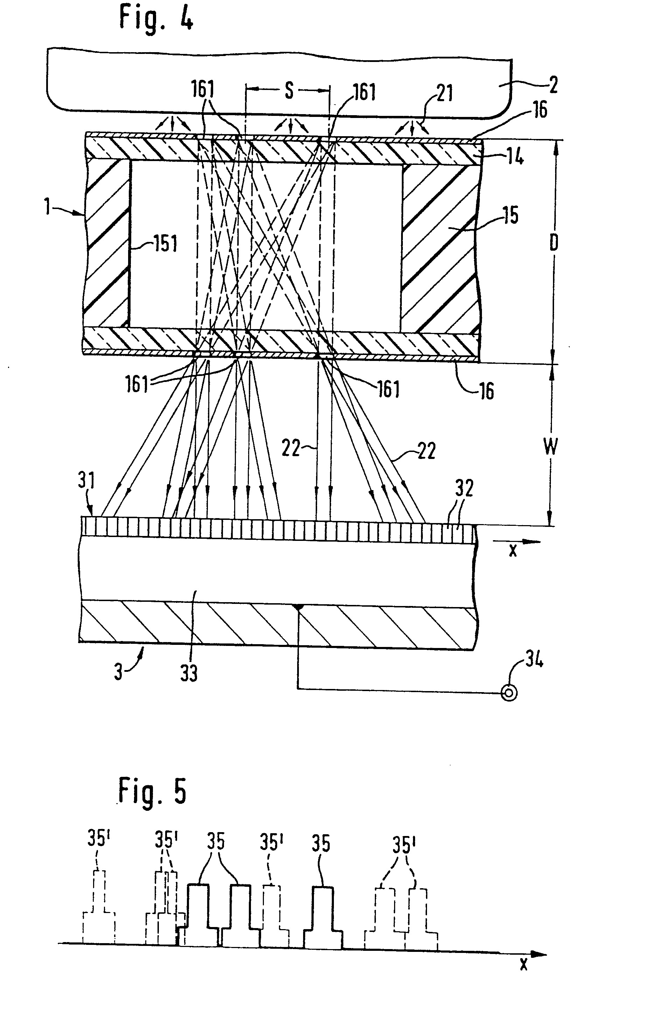

Die Wirksamkeit von relativ kleinen Abständen S zur Vermeidung der Möglichkeit von Fälschungen durch Herstellung von zweidimensionalen Kartenkopien wird anhand der Fig 4 und 5 erläutert.

Von der echten Karte gemäss Fig 2 seien zwei normale Photokopien 16 mit den transparenten Stellen 161 angefertigt worden, welche zu beiden Seiten einer Kartenschicht 15 geklebt werden. Diese Kartenschicht 15 mit der leicht herzustellenden grossen Oeffnung 151 dient hier nur als mechanische Stütze.

Es ist leicht ersichtlich, dass das austretende Licht 22 ausser den "richtigen" senkrecht verlaufenden, auch "falsche", in einem schiefen Winkel zur Kartenebene verlaufende Lichtstrahlen 22 enthält.

Das vom Photodioden-Array 31 detektierte Lichtmuster enthält nun ausser dem "richtigen" Anteil 35, welcher demjenigen der echten Karte (Fig 2, Fig 3) entspricht, auch noch die "falschen" Anteile 35, welche in Fig 5 punktiert gezeichnet sind. Die Karte kann leicht als gefälscht erkannt werden.

Das Photodioden-Array 31 im Prüfgerät hat von der Karte einen Abstand $W$ von ein bis zwei mal Kartendicke D, um den hier erläuterten Effekt zu ermöglichen.

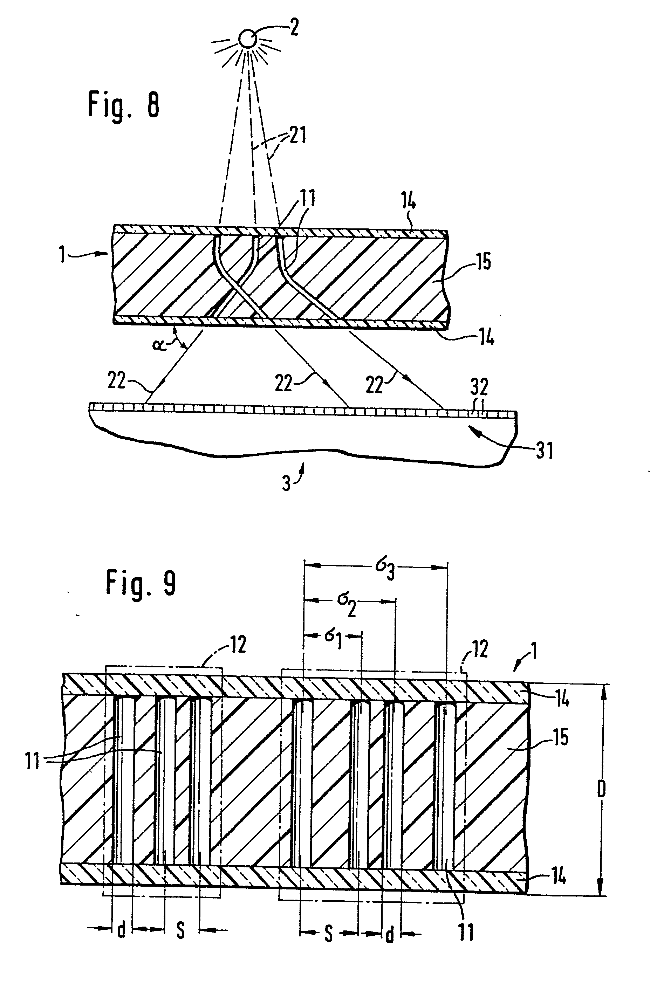

In Fig 9 sind zwei Lichtleitergruppen 12, die eine mit drei, die andere mit vier Lichtleiterlöchern 11, aufgezeichnet. In einem Zahlenbeispiel anhand dieser Figur 9 wird gezeigt, dass es recht schwierig wäre, eine Kartenfälschung zu erstellen.

Die Kartendicke sei z.B. D = 0,7 mm, der Lochdurchmesser d = 0,05 mm und die Lochdistanzen innerhalb der Lichtleitergruppen seien S < 0,3 mm. Es ist offensichtlich, dass es für einen Fälscher schwierig wäre, solche Lichtleiterlöcher mit der nötigen Präzision zu bohren.

Eine Fälschung analog der anhand von Fig 4 und 5 beschriebenen Methode ist hier, für mehr als zwei Löcher pro Gruppe, überhaupt nicht möglich.

Mit Photodioden-Arrays von 0,015 bis 0,025 mm Photodioden-Abstand sind die Positionen von Löchern 11, wie sie im obigen Beispiel beschrieben wurden, sehr genau zu ermitteln. Die geometrische Konstanz von Photodioden-Arrays ist sehr hoch und wesentlich grösser als diejenige der Kunststoffkarte.

Um den Einfluss der durch Temperatur- oder Feuchtigkeits-Einfluss bedingten Dimensionsänderungen der Karte unschädlich zu machen, kann als Karteninformation nur die Relativposition der Lichtleiter 11 innerhalb jeweils einer einzigen Lichtleitergruppe 12 massgebend sein. So wären z.B. gemäss Fig 9 in der rechts gezeichneten Lichtleitergruppe nur die Distanzen $\sigma_1$, $\sigma_2$, $\sigma_3$ für die Karteninformation massgebend, dagegen die Distanz zur benachbarten Lichtleitergruppe 12 ohne Bedeutung.

Die Distanzen $\sigma_1$ bis $\sigma_3$ liegen in Grössenordnungen von 0,5 bis 2 mm und sind somit genügend konstant.

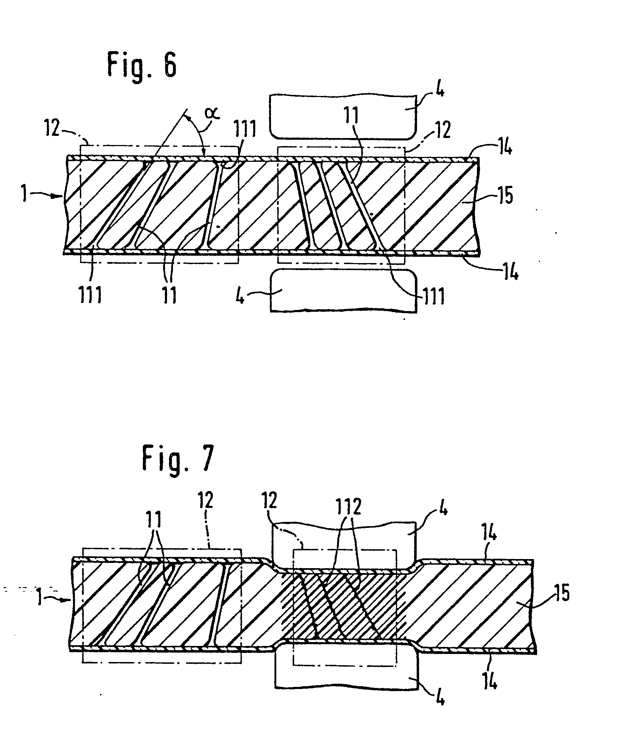

Die Lichtleiter brauchen nicht senkrecht auf der Kartenebene zu stehen, sondern können eine andere Richtung aufweisen, wie im Beispiel von Fig 6 und 7 gezeigt ist. Bei einem der Lichtleiter von Fig 6 ist der Richtungswinkel $\alpha$ zwischen Lichtleiter und Kartenebene eingezeichnet. In diesem Fall ist sowohl die geometrische Lage der Lichtleiter 11 in der Kartenebene, als auch die Richtung $\alpha$ der Lichtleiter für die Karteninformation massgebend.

Die Lichtleiter 11 können auch, anstatt nur aus Löchern zu bestehen, solche aus Glasleitungen bzw. Glasfasern oder Kunststoffleitungen mit höherem Berechnungsindex als ihre Umgebung 15 sein, wie in Fig 8 aufgezeichnet ist. Die Lichtleiter können auch gekrümmt sein, und die Karteninformation ist in der geometrischen Lage der Lichtaustrittsseite der Lichtleiter in der Kartenebene sowie im Richtungswinkel $\alpha$ enthalten.

Bei der Verwendung der Datenkarte als Geldersatzkarte kann jede einzelne Lichtleitergruppe 12 als Informationseinheit einen gewissen Entwertungs-Geldbetrag, z.B. Fr. 1.-, darstellen. Die Entwertung, d.h. die Verminderung des Kartenwertes um diesen Geldbetrag, kann durch Zerstörung bzw.Löschung der in einer Lichtleitergruppe enthaltenen Karteninformation geschehen.

Gemäss dem Beispiel der Fig 6 und 7 geschieht dies dadurch, dass in der Prüfstation mittels der geheizten Presskörper 4 die Karte im Bereich einer Lichtleitergruppe 12 thermisch aufgeheizt und komprimiert wird, wodurch die als Lichtleiter dienenden Löcher 11 geschlossen werden, wie aus Fig 7 ersichtlich ist. Die geringe, in den dünnen, z.B. einen Durchmesser von 0,05 mm aufweisenden Löchern enthaltene Luftmenge kann über die Austrittsstelle 111 in den Raum zwischen den Schichten 14 und 15 entweichen.

Für den Kartenbenützer ist es wünschbar, dass jede entwertete bzw. gelöschte
Stelle, d.h. jede zerstörte Lichtleitergruppe, visuell erkennbar
ist. Dies kann dadurch geschehen, dass durch die thermische Einwirkung der Kunststoff der Schicht 15 und/oder 14 verfärbt wird.
Diese Verfärbung ist in Fig 7 durch die verstärkte Schraffur
markiert. Die Verfärbung der zu entwertenden Stelle könnte auch
durch chemische Einwirkung oder Farbauftrag geschehen.

Ferner könnte sowohl die Zerstörung der Information einer Lichtleitergruppe zur Entwertung als auch die Anzeige dieser Entwertung
dadurch geschehen, dass mittels Stanzeinrichtung in der Prüfstation jeweils ein ganzer Bereich einer Lichtleitergruppe ausgestanzt wird.

Die Einrichtung hat den Vorteil, dass ausser der Lichtquelle und
dem Photodioden-Array keine optischen Mittel erforderlich sind.
Natürlich muss die Lichtstärke der Lichtquelle genügend gross
sein, damit die durch die Lichtleiter auf die Photozellen gelangende, geringe Lichtmenge bei der vorgegebenen Kartendurchlaufgeschwindigkeit in der Prüfstation zur Aussteuerung der Photo-
dioden-Arrays genügt.

Die Datenkarten könnten auch im sichtbaren Bereich undurchlässig
und nur für Infrarotlicht durchlässig sein.

Die Wandungen der Löcher 11 könnten mehrheitlich absorbierend
oder mehrheitlich reflektierend sein.

Die als Lichtleiter 11 wirkenden Löcher sollten möglichst schon
während der Kartenherstellung im plastischen Zustand mit dünne
Drähte enthaltenden Matrizen hergestellt werden. Natürlich wären
die Löcher auch mit LASER-Licht oder Bohrern von 0,05 mm Durchmit sehr hoher Drehzahl von z.B. $10^5$/Min. zu erstellen, was jedoch teurer wäre. Je kleiner der Lochdurchmesser, umso schwieriger ist die Herstellung, aber auch umso schwieriger die Erstellung von Fälschungen.

In Fig 10 ist eine für die codierte Speicherung von Dezimalzahlen als Karteninformation besonders geeignete Ausführungsform der Karte aufgezeichnet. In jeder Lichtleitergruppe 12 sind drei Lichtleiter vorhanden, welche an fünf möglichen Plätzen PL 1, PL 2, PL 3, PL 4, PL 5 angeordnet sein können. Zwischen benachbarten Plätzen besteht jeweils die gleiche Distanz S.

Es gibt $\binom{5}{3}$ = 10 verschiedene Anordnungsmöglichkeiten bzw. Verteilungskombinationen, von denen in Fig 10 fünf aufgezeichnet sind. Diese zehn möglichen Verteilungskombinationen können die zehn Dezimalziffern 0 bis 9 in codierter Form darstellen. Jede Lichtleitergruppe stellt also eine Dezimalziffer dar, und zwar in einer fehlererkennenden, redundanten Form. Denn mit fünf Plätzen wären im Maximum $2^5$ = 32 Verteilungskombinationen möglich, von denen aber nur diejenigen zehn als richtige gelten, welche drei Lichtleiter aufweisen. Eine Lichtleitergruppe, welche nur zwei oder nur einen Lichtleiter aufweist bzw. bei der ein oder zwei Lichtleiter durch Verschmutzung unwirksam ist, wird leicht als fehlerhaft erkannt. Die Lichtleiter 11 brauchen nicht genau senkrecht auf der Kartenebene zu stehen, sondern können einen von 90° abweichenden Winkel $\alpha$ aufweisen.

Die in Fig 10 gezeichneten Lichtleiter 11 liegen mit Blick auf die Kartenebene auf einer Lichtleiterlinie 13 und sind durch ein Photodiodenarray 3 gemeinsam abtastbar.

Die Distanz S zwischen benachbarten Plätzen kann z.B. 0,3 mm betragen, die Distanz zwischen Platz PL 1 und PL 5 somit 1,2 mm. Dadurch kann der Zentrum-Abstand von benachbarten Lichtleitergruppen 12 z.B. 2 mm betragen. Auf die Breite L eines Photodiodenarrays 3 von zirka 25 mm, bei zirka 1000 Photodioden zu 25 $\mu$m Distanz, sind etwa zwölf nebeneinander liegende Lichtleitergruppen, entsprechend zwölf Dezimalziffern, gemeinsam abtastbar. Die Position der Lichtleiter ist auf $\pm$ 0,025 mm genau detektierbar.

In Kartenlaufrichtung LR kann die Distanz AL zwischen den Lichtleiterlinien 13 z.B. 1,5 mm betragen, so dass auf der Karte z.B. 50 Lichtleiterlinien untergebracht werden und 50.12 = 600 Dezimalziffern, entsprechend einer 600stelligen Dezimalzahl, in 600 Lichtleitergruppen speicherbar sind. Von dieser aus 600 Dezimalziffern bestehenden, grossen Karteninformation kann jede einzelne Dezimalziffer selektiv gelöscht bzw. zerstört werden.

Für die Information einer Lichtleitergruppe 12 sind nur die relativen Abstände der Lichtleiter 11 innerhalb der Lichtleitergruppe massgebend und nicht deren absolute Lage. Deshalb können die Genauigkeitsanforderungen gross sein. Ausser der genauen geometrischen Anordnung in der Kartenebene muss auch die Ausrichtung der Lichtleiter, also der Winkel $\propto$ gegen die Kartenebene, genau stimmen. Aus diesen Gründen ist eine unbefugte Kartenherstellung schwierig.

Es sind die folgenden drei Eigenschaften, welche die Karte für die unten beschriebenen Anwendungen geeignet machen, nämlich erstens die grosse Fälschungssicherheit, d.h. die schwierige unbefugte Reproduzierbarkeit zufolge der dreidimensionalen Informationsspeicherung und deren grosse Genauigkeitsanforderung, zweitens die leichte und irreversible Löschbarkeit bzw. Zerstörbarkeit der einzelnen Lichtleitergruppen, und drittens die grosse Karteninformation. Damit wird die Karte u.a. für folgende Anwendungen geeignet:

a) Als reine Geldersatzkarte, bei der jede Lichtleitergruppe 12 einem bestimmten Geldwert entspricht,und die Karte durch Löschung bzw. Zerstörung dieser Gruppen in Entwertungsstationen entwertbar ist.

b) Als reine Identitätskarte, bei der eine erste Gruppe von Lichtleitergruppen 12 die Information einer individuellen, von Karte zu Karte verschiedenen Kartennummer entspricht, und eine zweite Gruppe von Lichtleitergruppen eine ebenfalls von Karte zu Karte verschiedene Identitätsinformation enthält, welche bei der Kartenherstellung in einem Chiffrierrechner aus Kartennummer und einem Geheimschlüssel errechnet wurde, und wobei bei der Identitätsprüfung in einer Prüfstation, welche ebenfalls den Chiffrierrechner und den Geheimschlüssel enthält, die Ueberprüfung der Korrespondenz zwischen Kartennummer und Identitätsinformation stattfindet.

c) Als Kombination von Geldersatzkarte und Identitätskarte, bei welcher die Karte für verschiedene Organisationen als Zahlungsmittel mit individueller Konto-Belastung verwendbar ist.

d) Als Zeiterfassungskarte, bei welcher die Zeit und/oder das Datum in einer Zeiterfassungsstaion durch Löschen bzw. Zerstören einer die Zeit darstellenden Auswahl von Lichtleitergruppen nicht fälschbar markiert wird.

e) Als beliebige Kombination von Geldersatzkarte, Identitätskarte, Zeiterfassungskarte, bei welcher jeweils auf einer einzigen Karte separate Felder von Lichtleitergruppen vorhanden sind. und in einem separaten Nummernfeld (F 1) die Kartennummer, in einem weiteren separaten Identifikationsfeld (F 2) die Identitätsinformation, und einem separaten Geldentwertungsfeld (F 3) die Geldwertinformation, und in einem separaten Zeiterfassungsfeld (F 4) die Zeitinformation enthält.

In Fig 11 ist eine solche Karte eingezeichnet, wobei jeweils die gelöschten Lichtleitergruppen 12 schraffiert gezeichnet sind. Die nicht gelöschten Lichtleitergruppen, welche als nicht schraffierte Quadrate gezeichnet sind, enthalten je eine Dezimalziffer als Karteninformation.

Die drei oben erwähnten Eigenschaften der Karte, nämlich hohe Fälschungssicherheit, leichte Löschbarkeit der Lichtleitergruppen, sowie grosse Karteninformation, erlauben eine Ausführungsform der Karte, bei welcher ein Teil der Karteninformation in den Lichtleitergruppen 12 und ein weiterer Teil in magnetischer, leicht veränderbarer Form in einem auf die Karte aufgebrachten Magnetstreifen (MS) enthalten ist.

Die magnetisch aufgezeichnete Information ist sehr geeignet für die Speicherung variabler Information, wie Geldwerte bei Verwendung als Geldersatzkarte oder Datum oder Zeit-Information bei Verwendung als Zeiterfassungskarte. In beiden Fällen besteht die Wünschbarkeit, dass die gespeicherte Information genügend fälschungssicher ist, was bei magnetischer Aufzeichnung ohne besondere Massnahmen nicht der Fall ist.

Mit Hilfe der auf der gleichen Karte aufgebrachten Lichtleitergruppen 12 lässt sich die Fälschungssicherheit der magnetisch aufgezeichneten, variablen Information ganz wesentlich erhöhen, was am Beispiel einer Geldersatzkarte z.B. gemäss Fig 12 kurz beschrieben wird:

- Die Echtheitsprüfung und allfällig die Identitätsprüfung geschieht durch Prüfung der in den Lichtleitergruppen 12 enthaltenen Information.

- Der Geldbetrag wird in einer Entwertungsstation in chiffrierter Form magnetisch aufgezeichnet, unter Verwendung eines Chiffrierrechners und einer Chiffrier- und Dechiffrier-Einrichtung bekannter Art.

Zur Chiffrierung des Geldbetrages wird die Information eines Geheimschlüssels, sowie die momentane Lichtleitergruppen-Information des Feldes F 5 von Fig 12 in den Chiffrierrechner eingegeben.

Bei jedem Entwertungsvorgang wird durch irreversibles Löschen einer oder mehrerer Lichtleitergruppen die Lichtleitergruppen-Information des Feldes F 5, und damit auch die Art der Chiffrierung, irreveribel geändert. Ohne diese Veränderung wäre es möglich, die magnetische Geldwertaufzeichnung vor der Entwertung von der Karte auf ein Tonband zu übertragen und nach der Entwertung wieder auf die Karte zurückzuübertragen, wobei die Unkenntnis des Geheimschlüssels keine Rolle spielt. Man könnte also die Karte immer auf den gleichen Geldwert rückstellen. Verwendet man jedoch die Lichtleitergruppen-Information des Feldes F 5 zur Eingabe in den Chiffrierrechner und dechiffriert den magnetisch aufgezeichneten Geldbetrag mit der vorerst unveränderten Lichtleitergruppen-Information und verändert vor dem Chiffrieren und Neu-Aufzeichnen des entwerteten Geldbetrages die Lichtleitergruppen-Information des Feldes F 5 durch Löschung von einer oder mehrerer Lichtleitergruppen, dann ist die oben beschriebene Kopiermethode unmöglich, da der Geldwert vor der Entwertung in einer anderen Art chiffriert wurde als nach der Entwertung.

Mit diesen Methoden wird die magnetische Geldwertspeicherung ebenso fälschungssicher gemacht wie die Lichtleitergruppen selbst.

In Fig 12 ist eine solche Karte mit Magnetstreifen MS eingezeichnet, wobei die gelöschten Lichtleitergruppen 12 schraffiert gezeichnet sind. Die nicht schraffiert gezeichneten, nicht gelöschten Lichtleitergruppen enthalten je eine Dezimalziffer als Karteninformation.

Patentansprüche

1. Flacher Informationsträger, welcher maschinell lesbare Informationen in codierter Form enthält und als in Prüfstationen prüfbarer Informationsträger wie z.B. als Identitätskarte und/oder Geldersatzkarte und/oder Zeiterfassungskarte dient, dadurch gekennzeichnet, dass mindestens ein Teil der Information in der geometrischen Anordnung in der Trägerebene sowie der Ausrichtung von quer durch die nicht transparenten Informationsträger verlaufenden Lichtleitern (11) besteht, welche eine Querschnittsfläche (FL) aufweisen, die nicht grösser als das Quadrat der Dicke (D) des Informationsträgers ist.

2. Informationsträger nach Anspruch 1, dadurch gekennzeichnet, dass die Lichtleiter (11) aus Löchern bestehen.

3. Informationsträger nach Anspruch 2, dadurch gekennzeichnet, dass die die Lichtleiter (11) bildenden Löcher Bohrungen sind, deren Durchmesser (d) kleiner als die halbe Kartendicke (D) ist.

4. Informationsträger nach Anspruch 2 oder 3, dadurch gekennzeichnet, dass er aus einer die Löcher enthaltenden mittleren Schicht (15) aus nicht transparentem Material und aus je einer mit dieser verbundenen Deckschicht (14) aus transparentem Material besteht.

5. Informationsträger nach einem der Ansprüche 1 bis 4, dadurch gekennzeichnet, dass die Lichtleiter (11) in zu jeweils einer Gruppeninformation gehörigen Lichtleitergruppen (12) angeordnet sind, wobei eine Lichtleitergruppe (12) mindestens zwei Lichtleiter (11) enthält, deren gegenseitiger Abstand (S) kleiner als die doppelte Dicke (D) des Informationsträgers ist.

6. Informationsträger nach Anspruch 5, dadurch gekennzeichnet, dass eine Lichtleitergruppe (12) mindestens drei Lichtleiter (11) enthält, deren gegenseitiger Abstand (S) kleiner als die Dicke (D) des Informationsträgers ist.

7. Informationsträger nach den Ansprüchen 5 und 6, dadurch gekennzeichnet, dass die Lichtleiter (11) der Lichtleitergruppen (12) je in einer, mit Lichtleiterlinie 13 bezeichneten, Linie angeordnet sind und die Lichtleiterlinien (13) aller Lichtleitergruppen (12) zueinander parallel und senkrecht zu einer für die maschinelle Ablesung der Informationen vorgesehenen Laufrichtung (LR) des Informationsträgers liegen.

8. Informationsträger nach Anspruch 7, dadurch gekennzeichnet, dass jede der Lichtleitergruppen (12) drei Lichtleiter (11) aufweist, welche auf fünf nebeneinander liegenden Plätzen (PL 1÷5) der Lichtleitergruppen verteilt sind und die zehn möglichen Verteilungskombinationen die zehn Dezimalziffern in codierter Form darstellen.

9. Informationsträger nach einer der voranstehenden Ansprüche, dadurch gekennzeichnet, dass die Lichtleiter (11) durch thermische und/oder chemische und/oder Druck-Einwirkung selektiv zerstörbar beziehungsweise löschbar bzw. veränderbar sind.

10. Informationsträger nach Anspruch 8, dadurch gekennzeichnet, dass die Lichtleiter (11) je einer ganzen Lichtleitergruppe (12) gemeinsam zerstörbar bzw. löschbar bzw. veränderbar sind.

11. Informationsträger nach Anspruch 10, dadurch gekennzeichnet, dass durch die Einwirkung das Informationsmaterial im Bereich einer Lichtleitergruppe (12) verfärbbar ist.

12. Informationsträger nach Anspruch 7, dadurch gekennzeichnet, dass der maximale Abstand von auf einer Lichtleiterlinie (13) liegenden Lichtleiter (11) kleiner als die Länge (L) eines Photodiodenarrays (3) ist.

13. Informationsträger nach einem der voranstehenden Ansprüche, dadurch gekennzeichnet, dass er ein aus einer Anzahl von Lichtleitergruppen (12) bestehendes Nummernfeld (F1) aufweist, wobei die Information eines Nummernfeldes eine individuelle Nummer in codierter Form ist und/oder ein aus einer weiteren Anzahl von Lichtleitergruppen (12) bestehendes Identifikationsfeld (F2) aufweist, wobei die Information der Lichtleitergruppen eines Identifikationsfeldes durch Verschlüsselung der Nummer in einem Chiffrierrechner mit Hilfe eines Geheimschlüssels entstanden ist und die Identitätsinformation darstellt und/oder ein aus einer weiteren Anzahl von Lichtleitergruppen bestehendes Geldentwertungsfeld (F3) aufweist, wobei die Anzahl der ungelöschten Lichtleitergruppen die codierte Information eines Geldwertes darstellt und die Löschung einer Lichtleitergruppe (12) der Reduzierung um einen Geldwert-Teilbetrag, d.h. einer Entwertung entspricht und/oder ein weiteres aus einer Anzahl von Lichtleitergruppen (12) bestehendes Zeiterfassungsfeld (F4) aufweist, in welchem die Information der Lichtleitergruppen Zeit- und/oder Datuminformationen enthalten.

14. Informationsträger nach einem der vorstehenden Ansprüche, dadurch gekennzeichnet, dass er ausser den Lichtleitergruppen einen Magnetstreifen (MS) enthält, auf welchem ein weiterer, mit Magnetinformation bezeichneter Teil der Information in leicht veränderbarer Form magnetisch speicherbar ist und die Magnetinformation durch Chiffrierung einer Geldwertinformation und/oder einer Zeitinformation in einem Chiffrierrechner entstanden ist, wobei auf den Chiffrierrechner die Information eines Geheimschlüssels sowie die Information eines Feldes (F5) von Lichtleitergruppen (12) eingegeben wird und wobei ferner bei jeder Veränderung der Geldwertinformation und/oder der Zeitinformation mindestens eine Lichtleitergruppe (12) des Feldes (F5) der Lichtleitergruppen gelöscht wird.

15. Informationsträger nach einem der Ansprüche 1 bis 14, dadurch gekennzeichnet, dass er als Karte ausgebildet ist.

16. Informationsträger nach einem der Ansprüche 1 bis 14, dadurch gekennzeichnet, dass er als Schlüssel ausgebildet ist.

## Fig. 1a

## Fig. 1

## Fig. 1b

Fig. 2

d

21

2

17

14

11

1

$F_L$

D

15

14

12

22

22

W

31

32

x

3

33

34

Fig. 3

35

35

x

Fig. 4

Fig. 5

## Fig. 6

## Fig. 7

Fig. 8

Fig. 9

Fig. 10

Fig. 11

Fig. 12

Europäisches Patentamt

**EUROPÄISCHER RECHERCHENBERICHT**

Nummer der Anmeldung

EP 81 10 0009

| | EINSCHLÄGIGE DOKUMENTE | | | KLASSIFIKATION DER ANMELDUNG (Int Cl ³) |
|---|---|---|---|---|
| Kategorie | Kennzeichnung des Dokuments mit Angabe, soweit erforderlich, der maßgeblichen Teile | betrifft Anspruch | | G 06 K 19/08 G 07 C 11/00 |
| X | <u>CH - A - 535 134</u> (LANDIS & GYR AG) <br> * Spalte 1, Zeile 36 - Spalte 2, Zeile 31 * | 1-4, 15 | | |
| | -- | | | |
| | <u>US - A - 3 829 661</u> (SILVERMAN) <br> * Figur 1; Zusammenfassung * | 1-4, 15 | | |
| | -- | | | |
| | <u>CH - A - 598 661</u> (VON BALLMOOS) <br> * Spalte 3, Zeile 51 - Spalte 4, Zeile 53 * | 1,9, 11,13, 15 | | RECHERCHIERTE SACHGEBIETE (Int. Cl. ³) |
| | -- | | | G 06 K 19/04 <br> 19/06 <br> 19/08 |
| | <u>US - A - 4 108 367</u> (HANNAN) <br> * Insgesamt * | 1,9, 13,15 | | |
| | -- | | | |
| | <u>FR - A - 2 279 162</u> (LANDIS & GYR ZUG AG) <br> * Figuren 1-3; Seite 2, Zeile 24 - Seite 3, Zeile 34 * <br> & CH - A - 574 144 | 1,9, 13,15 | | |
| | -- | | | |
| | <u>US - A - 4 094 462</u> (MOSCHNER) <br> * Spalte 2, Zeile 1 - Spalte 3, Zeile 20; Zusammenfassung * | 1,13-15 | | KATEGORIE DER GENANNTEN DOKUMENTE <br><br> X: von besonderer Bedeutung <br> A: technologischer Hintergrund <br> O: nichtschriftliche Offenbarung <br> P: Zwischenliteratur <br> T: der Erfindung zugrunde liegende Theorien oder Grundsätze |
| | -- | | | |
| | IBM TECHNICAL DISCLOSURE BULLETIN, Band 9, Nr. 3, August 1966, Seite 314 New York, U.S.A. J. SVIGALS: "Credit card design" | 15,16 | | E: kollidierende Anmeldung <br> D: in der Anmeldung angeführtes Dokument <br> L: aus andern Gründen angeführtes Dokument |
| | ---- | | | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 08-04-1981 | PESCHEL |

EPA form 1503.1  06.78